# EUROPÄISCHE PATENTANMELDUNG

(11) **EP 1 524 450 A1**
(43) Veröffentlichungstag der Anmeldung: **20.04.2005**
(21) Anmeldenummer: 04104650.9
(22) Anmeldetag: 24.09.2004
(51) Int. Cl.: F16F 9/04

(54) **Faltenbalg-Luftfeder**

(30) Priorität: 16.10.2003 DE 10348103
(71) Anmelder: Continental Aktiengesellschaft, 30165 Hannover (DE)
(72) Erfinder: Krauss, Hans Peter, 30453 Hannover (DE)

(57) **Zusammenfassung**

2.1 Wenn zu viele Falten (28a, ...) verbaut werden, neigen Luftfeder-Faltenbälge (26) insbesondere bei Einfederungsvorgängen zum Ausknicken.
   Die sich im Fall eines im Bereich der Radaufhängung beengten Platzangebots stellende Aufgabe besteht darin, eine schmalbauende pneumatische Faltenbalgfeder zu schaffen.
2.2 Zur Verhinderung eines Ausknickens ist der zwischen zwei abstandsvariablen Endgliedern (16, 20) eingespannte Mehrfachfaltenbalg (26) mit einem Führungselement (12) ausgestattet, das vorzugsweise die Kolbenstange eines in die Luftfeder (6) integrierten, im Wesentlichen aus Zylinder (8) und Kolben (10) nebst Kolbenstange (12) bestehenden Stoßdämpfers (4) ist, wobei das am "oberen" Ende des Mehrfachfaltenbalgs (26) angeordnete Endglied (20) das "untere" Ende des Stoßdämpferzylinders (8) ist, und wobei das am "unteren" Ende des Mehrfachfaltenbalgs (26) angeordnete Endglied (16) ein radseitig anbringbares Befestigungsteil der Stoßdämpferstange (12) ist.
2.3 Die Luftfeder (6) mit dem erfindungsgemäß abgestützten Mehrfachfaltenbalg (26) ist überall dort einsetzbar, wo Luftfedern eingesetzt werden.

## Beschreibung

Die Erfindung betrifft eine Luftfeder mit einem Mehrfachfaltenbalg, der von zwei abstandsvariabel zueinander angeordneten Endgliedern begrenzt wird.

Zur Erzielung eines zuverlässig reproduzierbaren Einfederungsvorganges ist es wünschenswert oder sogar erforderlich, dass der zwischen den beiden Endgliedern eingespannte Luftfederbalg axial geführt wird.

Faltenbalg-Luftfedern unterscheiden sich grundsätzlich von Rollbalg-Luftfedern.

Rollbalg-Luftfedern, z. B. Schlauchrollbalg-Luftfedern, die einen Rollbalg aufweisen, werden stets durch einen im Innern befindlichen Abrollkolben geführt. Außerdem gibt es häufig eine zusätzliche Außenführung. Mit Hilfe dieses mindestens einen Führungsmittels wird der (Schlauch-)Rollbalg an einem Ausknicken gehindert. Dadurch ist eine einfache Anpassung der Luftfeder an den Bauraum hinsichtlich der Hauptabmessungen (Durchmesser, Federweg) möglich. Diese Bauart findet bevorzugt in Fahrzeugen Verwendung. Hauptvorteil: Große Gestaltungsfreiheit.

Soll anstelle einer Rollbalg-Luftfeder eine Faltenbalg-Luftfeder, z. B. als federnde Komponente einer Feder/Dämpfer-Einheit, zur Anwendung gelangen, dann gibt es keinen Abrollkolben und somit auch keine Abrollkolben-Innenführung.

Derzeit bekannte Faltenbalg-Luftfedern weisen weder eine Innen- noch eine Außenführung auf. Wegen der ziehharmonika-artigen Konstruktion eines (Mehrfach-)Faltenbalgs ist eine Führung nicht ohne weiteres realisierbar.

Um ein Ausknicken zu verhindern, haben diese Luftfedern einen recht großen Durchmesser im Verhältnis zum möglichen (relativ kleinen) Federhub. Außerdem ist wegen der Ausknickgefahr die Anzahl der Falten in der Regel auf maximal 2 bis 3 Falten begrenzt. Diese Bauart fmdet bevorzugt bei Maschinenlagerungen und Bahnfahrzeugen Verwendung. Hauptvorteil: Einfache Fertigungsverfahren, sehr kostengünstig.

Die US-Patentschrift 2,633,811 beschreibt eine Eisenbahn-Luftfeder mit Mehrfach-Faltenbalg. Wegen des beträchtlichen Platzangebots im Bereich der Radaufhängung können derartige für Eisenbahnwaggons konstruierte Faltenbalg-Luftfedern sehr breit dimensioniert werden, so dass im vorliegenden Fall wegen des günstigen Verhältnisses von Federdurchmesser zur Einfederungshöhe die Gefahr des Ausknickens nicht besteht und deshalb auf entsprechende Vorkehrungen verzichtet werden kann.

Anders hingegen bei Luftfedern für Personenkraftwagen, wo im Hinblick auf die Gefahr des seitlichen Ausknickens wegen des beengten Platzangebots und des Wunsches nach einem komfortabel großen Federhub ein ungünstiges Verhältnis zwischen Federdurchmesser und Einfederungshöhe gegeben ist.
Da Faltenbälge, deren Relation Luftfederdurchmesser zu Luftfederhub klein ist und deshalb mehrere Falten in Reihe anzuordnen sind, zum Ausknicken neigen, hat man bisher auf die Verwendung von Mehrfachfaltenbälgen in Personenkraftwagen verzichtet.

### Aufgabe der Erfindung

Die sich im Fall eines im Bereich der Radaufhängung beengten Platzangebots stellende Aufgabe der Erfindung besteht deshalb darin, eine schmalbauende pneumatische Faltenbalgfeder zu schaffen, bei der ein Ausknicken zuverlässig verhindert wird.
D. h.: Es soll eine Faltenbalg-Luftfeder-Bauart gefunden werden, die einer Rollbalgluftfeder ähnliche Abmessungen hat. Vorzugsweise sollen dabei bereits vorhandene Bauteile verwendet werden können.

### Lösung und Vorteile

Verglichen mit der Herstellung von Rollbalg-Luftfedern sind für die Herstellung von Faltenbalg-Luftfedern preiswertere Verfahren bekannt. Auch sind die Anforderungen an die Werkstoffe für Faltenbälge nicht so groß wie bei Rollbälgen.
Gemäß Anspruch 1 ist ein solcher Mehrfachfaltenbalg mit einem Führungselement ausgestattet, wodurch ein sonst mögliches Ausknicken auch bei Verwendung langgestreckter schlanker Mehrfachfaltenbälge zuverlässig verhindert wird.
Versucht der Luftfederbalg anlässlich eines Einfederungsvorganges auszuknicken, so wird er einseitig durch das Führungselement abgestützt.

Vorteilhafte Ausgestaltungen und Weiterbildungen der Erfindung ergeben sich aus den Unteransprüchen:

Die Falten können sich vorzugsweise an einer zylindrischen "Auskleidung" des Mehrfachfaltenbalgs abstützen.
Da das Stützelement im Innern des Balgs angeordnet ist, besteht kein zusätzlicher Platzbedarf. Im Vergleich zu Rollbälgen ist die wirksame Balgfläche im Verhältnis zum Außendurchmesser größer (Bauraumvorteil).
Mit Hilfe der Innenführung wird es erstmals möglich, im Vergleich zu teuren Rollbälgen kostengünstige Faltenbälge einzusetzen.
Die durch Ein- und Ausfedern bzw. durch Niveauregulierung gegebenen Änderungen der Baulänge werden durch Ineinanderschieben oder Ausweichen des Führungselements kompensiert.
Vorzugsweise wird das innerhalb des Faltenbalgs angeordnete Führungselement von der Kolbenstange eines Stoßdämpfers gebildet. Durch eine Integration eines Stoßdämpfers in eine Faltenbalg-Luftfeder ergibt sich eine besonders kompakte und platzsparende Bauweise.
Dies ist bei einer Gas-Feder/Dämpfer-Einheit durch Ineinanderschieben von Dämpfer-Kolben und -Zylinder realisiert.
Aber auch eine Anordnung einer Faltenbalg-Luftfeder konzentrisch um einen hydraulischen Dämpfer oder um eine einfache Teleskopstange ist denkbar.
Ist das im Innern des Faltenbalgs angeordnete Führungselement eine Teleskopstange, so erfolgt die mit dem Ein- und Ausfederungsvorgang gegebene Reibung nicht zwischen Faltenbalg und Führungselement sondern ausschließlich innerhalb des teleskopartigen Führungselements.
Ein ausreichend großer Spalt zwischen Führungselement und Faltenbalg verhindert Klemm- und Strömungsverluste.
Mit Hilfe des erfindungsgemäßen Führungselements können Faltenbälge mit mehr als drei Falten problemlos zum Einsatz gelangen.
Die erfindungsgemäß Faltenbalg-Luftfeder ist so konzipiert, dass weitgehend schon vorhandene Teile verwendet werden können.
Die Luftfeder mit dem erfindungsgemäß abgestützten Mehrfachfaltenbalg ist überall dort einsetzbar, wo Luftfedern eingesetzt werden.

### Zeichnung

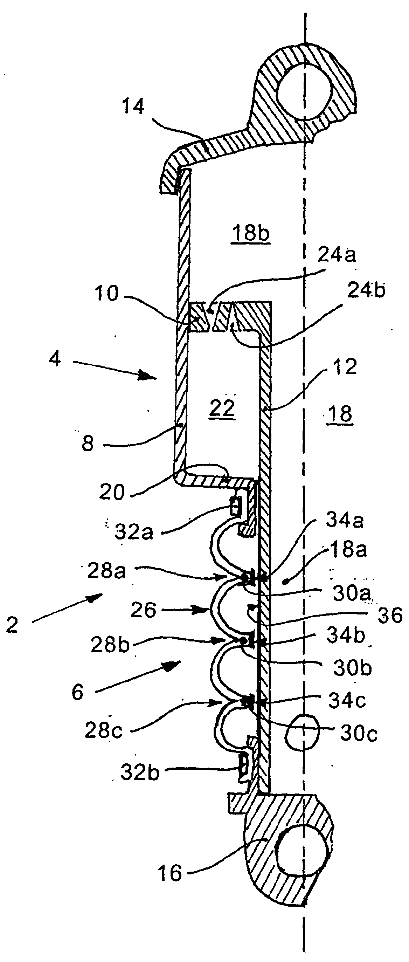

Die einzige Abbildung zeigt ein Ausführungsbeispiel der erfindungsgemäßen Faltenbalg-Luftfeder in Gestalt einer Feder/Dämpfer-Einheit, ein sogenanntes "Luftfederbein", im Längsschnitt.

### Beschreibung

Die in der Abbildung dargestellte Faltenbalg-Luftfeder 6 weist einen integrierten Gasdruck-Stoßdämpfer 4 auf, die zusammen eine Feder-Dämpfer-Einheit 2 bilden.

Der Stoßdämpfer 4 setzt sich im Wesentlichen aus einem Zylinder 8 und einer mit Kolben 10 versehenen Dämpferstange (Kolbenstange) 12 zusammen. An seinem "oberen" Ende ist der Zylinder 8 mit einem - vorzugsweise - chassisseitig anbringbaren Deckel 14 abgeschlossen. Das "untere" Ende der im vorliegenden Beispiel als Hohlrohr ausgebildeten Dämpferstange 12 weist ein vorzugsweise radseitig anbringbares Verschlussteil (Befestigungsteil) 16 auf.

Das Innere 18a der hohlen Dämpferstange 12 bildet zusammen mit dem oberen Bereich 18b des Dämpferzylinders 8 ein erstes Dämpfervolumen 18, während der zwischen Dämpferkolben 10 und Zylinderboden 20 befindliche (untere) Bereich des Dämpferzylinders 8 ein zweites Dämpfervolumen 22 bildet. Beide Volumina 18, 22 sind über Dämpferventile 24a, 24b miteinander verbunden.

Der Zylinderboden 20 einerseits und das "untere" Verschlussteil 16 andererseits bilden die abstandsvariabel zueinander angeordneten Endglieder einer Mehrfachfaltenbalg-Luftfeder 6 (hier: Vierfachfaltenbalg, 26). Dieser Faltenbalg 26 weist - wie bei Faltenbälgen üblich - endseitig und an den einzelnen Falten 28a, ... jeweils eine Verstärkungseinlage 30a, ... auf.

Die Enden des Faltenbalgs 6 sind jeweils mittels eines Spann/Klemmringes 32a,b druckdicht und zugstabil an den ihnen zugeordneten Endgliedern 16, 20 befestigt, während die einzelnen Falten 28a, ... mehr oder weniger lose von der als Führungselement dienenden Außenwand der Kolbenstange 12 geführt werden. Im vorliegenden Ausführungsbeispiel sind die Innenseiten der Faltenbalg-Falten 28a, ... und die zylindrische Oberfläche der Kolbenstange 12 mit einem Reibbelag 34a,...; 36 versehen. Im Fall des Ausknickens wird der Faltenbalg 6 gestützt, wobei die mit Reibbelag 24a, ... versehenen Faltenbalg-Falten 28a, ... auf der ebenfalls mit Reibbelag 36 versehenen Zylinderfläche der Kolbenstange 12 entlang gleiten können.

### Bezugszeichenliste

- 2: Luftfederbein, Feder-Dämpfer-Einheit
- 4: (Gasdruck-)Stoßdämpfer
- 6: (Mehrfach-)Faltenbalg-Luftfeder
- 8: Zylinder, Dämpferzylinder, Stoßdämpferzylinder
- 10: Kolben
- 12: Kolbenstange, Dämpferstange, Stoßdämpferstange, Hohlrohr, zylindrisches Teil, Führungselement
- 14: (chassisseitiger) Deckel
- 16: radseitig anbringbares Verschlussteil, Befestigungsteil, Endglied
- 18a: Inneres der Dämpferstange
- 18b: "oberer" Bereich des Dämpferzylinders
- 18: erstes Dämpfervolumen
- 20: Zylinderboden, Endglied
- 22: "unterer" Bereich des Dämpferzylinders
- 24a, 24b: Dämpferventil(e), Dämpferkanal
- 26: (Mehrfach-)Faltenbalg, Balg
- 28a,: Falte(n) des Faltenbalgs, Faltenbalg-Falte(n)
- 30a,: Verstärkungseinlage(n), Verstärkungsring(e)
- 32a,: Spann/Klemmring(e), Befestigungsmittel
- 34a,: Reibbelag an Faltenbalg-Falte(n)
- 36: Reibbelag auf Zylinderfläche der Kolbenstange

## Patentansprüche

1. Faltenbalg-Luftfeder (6)
mit einem Mehrfachfaltenbalg (26), der von zwei abstandsvariabel zueinander angeordneten Endgliedern (16, 20) begrenzt ist,
**dadurch gekennzeichnet,**
**dass** der Mehrfachfaltenbalg (26) zur Verhinderung eines Ausknickens mit einem Führungselement (12) ausgestattet ist.

2. Faltenbalg-Luftfeder nach Anspruch 1,
**dadurch gekennzeichnet,**
**dass** das Führungselement (12) zylindrisch ausgebildet und koaxial im Innern des Mehrfachfaltenbalges (26) angeordnet ist,
wobei sich die Falten (28a, ...) des Mehrfachfaltenbalgs (26) an der zylindrischen Außenfläche des koaxial angeordneten Führungselements (12) abstützen können.

3. Faltenbalg-Luftfeder nach Anspruch 1 oder 2,
**dadurch gekennzeichnet,**
**dass** das Führungselement (12) teleskopartig ausgebildet ist.

4. Faltenbalg-Luftfeder nach einem der Ansprüche 1 bis 3,
**gekennzeichnet durch**
einen Spalt zwischen Führungselement (12) und Faltenbalg (26).

5. Faltenbalg-Luftfeder nach einem der Ansprüche 1 bis 4,
**dadurch gekennzeichnet,**
**dass** an der Innenseite der Faltenbalg-Falten (28a, ...) und/oder an der zylindrischen Oberfläche des Führungselements (12) ein Reibbelag (34a, ...; 36) vorgesehen ist.

6. Faltenbalg-Luftfeder nach einem der Ansprüche 1 bis 5,
**gekennzeichnet durch**
**dass** das Führungselement (12) die Kolbenstange eines in die Luftfeder (6) integrierten, im Wesentlichen aus Zylinder (8) und Kolben (10) nebst Kolbenstange (12) bestehenden Stoßdämpfers ist.

7. Faltenbalg-Luftfeder nach Anspruch 6,
**dadurch gekennzeichnet,**
**dass** das am "oberen" Ende des Mehrfachfaltenbalgs (26) angeordnete Endglied (20) das "untere" Ende des Stoßdämpferzylinders (8) ist, und
**dass** das am "unteren" Ende des Mehrfachfaltenbalgs (26) angeordnete Endglied (16) ein radseitig anbringbares Befestigungsteil der Stoßdämpferstange (12) ist.

8. Faltenbalg-Luftfeder nach Anspruch 6 oder 7,
**dadurch gekennzeichnet,**
**dass** der Stoßdämpfer ein Gasdruck-Stoßdämpfer (4) ist,
wobei der Kolben (10) das vom Dämpferzylinder (8) nebst Deckel (14) und Zylinderboden (20) umschlossene Volumen (18) in zwei Teilräume (18a, 18b) teilt, die über mindestens ein Dämpferventil (24a, ...) bzw. mindestens einen Dämpferkanal miteinander verbunden sind.

9. Faltenbalg-Luftfeder nach einem der Ansprüche 1 bis 7,
**dadurch gekennzeichnet,**
**dass** das Führungselement (12) Teil eines hydraulischen Dämpfers ist.

10. Faltenbalg-Luftfeder nach einem der Ansprüche 1 bis 5,
**dadurch gekennzeichnet,**
**dass** das Führungselement (12) eine Teleskopstange ist.

11. Faltenbalg-Luftfeder nach Anspruch 10,
**dadurch gekennzeichnet,**
**dass** die Gliederzahl der Teleskopstange der Anzahl der Faltenbalg-Falten (28a, ...) entspricht, wobei die mit Ein- und Ausfederungsvorgängen gegebene Reibung innerhalb des teleskopartigen Führungselements (12) zwischen dessen einzelnen Gliedern erfolgt.

12. Faltenbalg-Luftfeder nach einem der Ansprüche 1 bis 11,
**dadurch gekennzeichnet,**
**dass** der Faltenbalg (26) mehr als drei Falten (28a, ...) aufweist.
